# EUROPÄISCHE PATENTANMELDUNG

(11) **EP 0 620 155 A2**
(43) Veröffentlichungstag der Anmeldung: **19.10.1994**
(21) Anmeldenummer: 93111960.6
(22) Anmeldetag: 27.07.1993
(51) Int. Cl.: B65D 19/22, B65D 19/40, B65D 19/26

(54) **Trägerteil für Paletten**

(30) Priorität: 16.04.1993 DE 9305621 U
(71) Anmelder: EWvK Entwicklungsgesellschaft für die Wiederverwertung von Kunststoffen mbH, D-65203 Wiesbaden (DE); IBK Bacher AG, CH-5212 Hausen bei Brugg (CH)
(72) Erfinder: Hock, Hans-Georg, Dipl.-Ing., D-6712 Bobenheim-Roxheim (DE)
(74) Vertreter: Blum, Rudolf Emil Ernst

(57) **Zusammenfassung**

Der Klotz (3) weist einen Flächenabschnitt (5) zur Aufnahme der Nägel (6) auf, mittels welchen die Deckbretter (1) und Unterzüge (2) der Palette mit ihm verbunden sind. Vom Bereich des Flächenabschnittes (5) stehen Stege (25,26) ab, welche in jeweils einer Querplatte (31,33) einstückig enden. Damit sind weitere Flächenabschnitte (7,8,9,10) gebildet, die lediglich zur Uebertragung von Druckkräften, jedoch nicht Verbindungskräften zwischen Klotz (3) und Deckbrettern (1), Unterzügen (2), bzw. Bodenbrettern (4) dienen. Die Stege (25,26) umgrenzen Durchdringungen (22) und Aussparungen (23,24), welche eine Gewichtsverminderung des Klotzes (3) bewirken. Weil der Klotz (3) spritzgegossen ist, sind die Aussenflächen der Querplatten (31,33) beschriftbar.

## Beschreibung

Die vorliegende Erfindung betrifft einen einstückigen Trägerteil für Paletten, die Brettglieder aufweisen, welche mit Klötzen verbunden sind.

Gegenwärtig sind verschiedene Arten von Paletten im Einsatz, die entsprechend dem Verwendungsgebiet genormt ausgebildet sind.

Bekannt sind Chemiepaletten, die gemäss dem Normentwurf des AK Paletten im VCI/APME (Verband der Chemischen Industrie, Deutschland, bzw. Association of Plastic Manufacturers in Europe) aufgebaut sind. Insbesondere wird hierzu auf die "Spezifikation für Chemie-Paletten (CP), Standards 1 bis 9" (Frankfurt vom 12/3/1992 und Brüssel vom 12/03/1992) und die dazugehörigen Masszeichnungen CP1 bis CP9 hingewiesen.

Weiter bekannt sind die europäische Vierweg-Flachpalette 800 x 1200 mm nach UIC-Norm 435-2, die sogenannte "Euro-Palette" oder "UIC-Palette" sowie Vierwege-Fensterpaletten (Brauereipaletten) nach DIN 15141, Teil 4. In den entsprechenden Normen sind Grösse, Holzbeschaffenheit und Qualität der jeweiligen Paletten beschrieben und festgelegt.

Paletten bestehen im allgemeinen aus Holzteilen, die mittels Nägeln oder Klammern miteinander verbunden sind. Die zitierten Normen besagen, dass eine Verwendung von Abfallholz oder minderwertigem Holz als Ausgangsmaterial ausgeschlossen ist. Der Rohstoff Holz wird jedoch immer kostbarer. Allein in der Bundesrepublik Deutschland werden jährlich 1,4 Millionen Tonnen Schnittholz für den Bau von Paletten verwendet. Weiter darf das verwendete Holz nicht imprägniert sein.

Das Holz nimmt Feuchtigkeit auf, so dass mindestens gewisse Teile der Palette der Fäulnis ausgesetzt sind. Holz gibt durch Kapillarwirkung diese Feuchtigkeit stetig an das auf der Palette abgelegte Gut ab. So werden insbesondere Kartonageverpackungen und Papiersäcke feucht. Dies führt zum "Aufweichen" der Verpackungen und zum Verlust der Inhaltsstoffe. Weiter splittert Holz bei Stoss durch z.B. die zum Transportieren der Paletten verwendeten Hubstapler sehr leicht. Insbesondere die Distanzklötze sind diesen Stössen ausgesetzt.

Es sind schon Versuche gemacht worden, für gewisse Teile von Paletten Altkunststoffe, sogenannte wiederverwertete Kunststoffe, zu verwenden, und durch ein Extrudieren und nachfolgendes Sägen insbesondere die Klötze für die Paletten herzustellen. Diese Versuche zeigten jedoch, dass die Erzeugnisse nicht nur ein zu hohes Gewicht hatten, sondern schwerer beschriftbar waren.

Hier will die Erfindung Abhilfe schaffen. Die Erfindung, wie sie in den Ansprüchen gekennzeichnet ist, löst die Aufgabe, einen einstückigen Trägerteil für Paletten zu schaffen, der aus einer ersten Werkstoffphase aus einem Gemisch aus Polyolefinen und aus einer weiteren aus einem Gemisch aus kunststofffremden Stoffen besteht. Weiterhin weist der Trägerteil mindestens eine beschriftbare Seitenfläche zur Aufnahme von genormten Markierungen von Paletten auf und Stege, welche Durchdringungen und/oder Aussparungen im Trägerteil bestimmen.

Die durch die Erfindung erreichten Vorteile sind im wesentlichen darin zu sehen, dass der Trägerteil aus Kunststoffgemischen aus wiederverwerteten Haushaltskunststoffabfällen bestehen kann, dass er beschriftbar und gewichtssparend ist. Weiter kann das Kunststoffgemisch von ausgeschiedenen Paletten durch Umschmelzen erneut zur Herstellung derselben Trägerteile wiederverwendet werden.

Im folgenden wird die Erfindung anhand von mehrere Ausführungswege darstellenden Zeichnungen näher erläutert.

Es zeigt:
Figur 1 beispielhaft eine Palette,
Figuren 2-4 eine erste Ausführung eines Klotzes für Paletten,
Figuren 5 und 6 eine zweite Ausführung eines Klotzes für Paletten,
Figur 7 eine dritte Ausführung eines Klotzes für Paletten,
Figur 8 eine Kufe für Paletten, die aus einem Bodenbrettglied und Klötzen besteht, im Schnitt entlang der Linie VIII-VIII der Figur 9,
Figur 9 eine Seitenansicht der Kufe nach Figur 8, und
Figur 10 einen Schnitt entlang der Linie X-X der Figur 9.

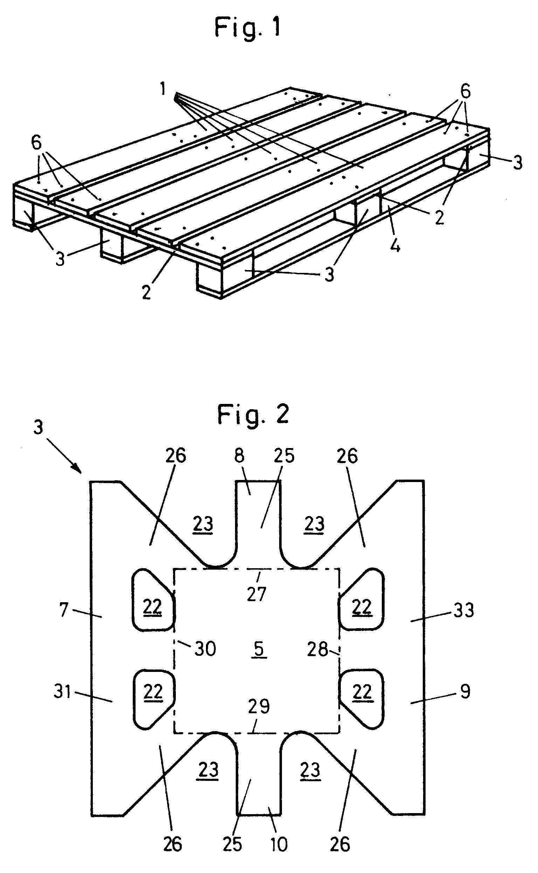

Die Palette weist eine Anzahl, in der Figur 1 fünf, Deckbretter 1 auf. Diese Deckbretter 1 sind auf quer dazu verlaufenden Unterzügen 2 abgestützt. Die Deckbretter 1 und Unterzüge 2 sind mittels Klammern oder Nägel 6 mit den sie tragenden Klötzen 3 verbunden. Diese Nägel 6 sind in festgelegten, genormten Abständen voneinander und von den Rändern der Deckbretter 1, Unterzüge 2 und Klötze 3 angeordnet. Die Klötze 3 schliesslich sind mit Bodenbrettern 4 verbunden, die parallel zu den Deckbrettern 1 verlaufen.

Bei den bekannten Paletten sind sämtliche gezeigten Bauteile aus Holz und haben somit die eingangs beschriebenen Nachteile.

Es wird nun auf die Figuren 2-4 verwiesen, welche eine erste Ausführung der Erfindung und insbesondere auf Klötze beschränkt, gezeigt ist.

Der Klotz 3 besteht aus wiederverwertetem Kunststoff. Dieser Kunststoff ist insbesondere ein Kunststoffgemisch aus verschiedenen, miteinander verschmolzenen thermoplastischen Kunststoffen, welche im Haushalt-Kunststoff-Müll enthalten sind. Der hauptsächlichste Anteil bilden dabei Polyolefine, die etwa 55-75 Gew-% des Kunststoff-Mülls ausmachen. Auch können Polystyrole, Polyvinylchloride, Polyester und Polyamide in kleineren Anteilen vorhanden sein und weitere, von Polyolefinen verschiedene Kunststoffe. Der Haushalt-Kunststoff-Müll enthält sogenannte Hohlkörper, d.h. Behälter z.B. für Geschirrspülmittel, Reinigungsmittel unterschiedlichster Art, Badezusätze etc, weiter Folien, Becher, Blister usw.

Dieses Gemisch aus den wiederverwerteten, miteinander verschmolzenen Kunststoffen enthält auch von den jeweiligen ursprünglichen Verpackungen, Behältern, etc. stammende kunststofffremde Stoffe, so beispielsweise Papieranteile und Reste von Aluminiumfolien, etc. Entsprechend lässt sich feststellen, dass das Material, aus welchem der Klotz 3 gefertigt ist, aus zwei Phasen, einer Kunststoffphase mit einem wesentlichen Anteil an Polyolefinen und einer kunststofffremden Phase besteht, letztere kann übrigens bis zu 10 % des Gesamtgewichts betragen.

Der Klotz 3 ist spritzgegossen. Das bewirkt, dass seine Aussenflächen keine Vakuolen aufweisen, die beim bekannten Stangengiessen ähnlich aufgebauter Kunststofferzeugnisse vorkommen, welche ein nachträgliches, genormtes vorschriftsgemässes Beschriften erschweren. Auch kann die Kunststoffspritzform bereits mindestens einige der vorgeschriebenen Angaben, die auf den Klötzen einer Palette vorhanden sein müssen, als formgebende Gussformstruktur, also z.B. Zahlen oder Buchstaben enthalten.

Besonders ist zu erwähnen, dass die Abstände der Nägel 6 von den Rändern der verschiedenen Bauteile und unter sich in den Normen vorgeschrieben sind. Somit ergibt sich für jeden Klotz, und insbesondere nun für die in der Figur 2 in der Aufsicht gezeigten Ausführung ein Flächenabschnitt 5, der als Nagelzone bezeichnet wird. Die Deckbretter 1 und Unterzüge 2 sind somit bei diesem Flächenabschnitt 5 mit dem Klotz 3 verbunden, über welchem Flächenabschnitt 5 auch von den Brettern 1 und Unterzügen 2 wirkende Kräfte auf den Klotz 3 übertragen werden. Ein gleicher Flächenabschnitt ist für die Verbindung des Klotzes 3 mit den Bodenbrettern 4 vorgeschrieben.

Dieser Flächenabschnitt 5 ist von weiteren Flächenabschnitten 7-10 umgeben, über welche lediglich Kräfte von den Brettern 1 und Unterzügen 2 auf den Klotz 3 übertragbar sind, bei welchen jedoch (ausser der gegenseitigen Berührung) keine Verbindung zwischen den genannten Bauteilen vorhanden ist. Diese weiteren Flächenabschnitte 7-10 sind nun wie folgt gebildet.

Von jeder der geradlinig verlaufenden Seitenlinien 27-30 des ein Viereck bildenden Flächenabschnittes 5 steht bei der Mitte derselben ein Steg 25 ab, der rechtwinklig zu den entsprechenden Seitenlinien 27-30 verläuft. Weiter steht von jeder Ecke des Vierecks ein Steg 26 ab, der mit den jeweiligen Seitenlinien 27-30 des Vierecks beim gezeigten Beispiel einen Winkel von 45° einschliesst.

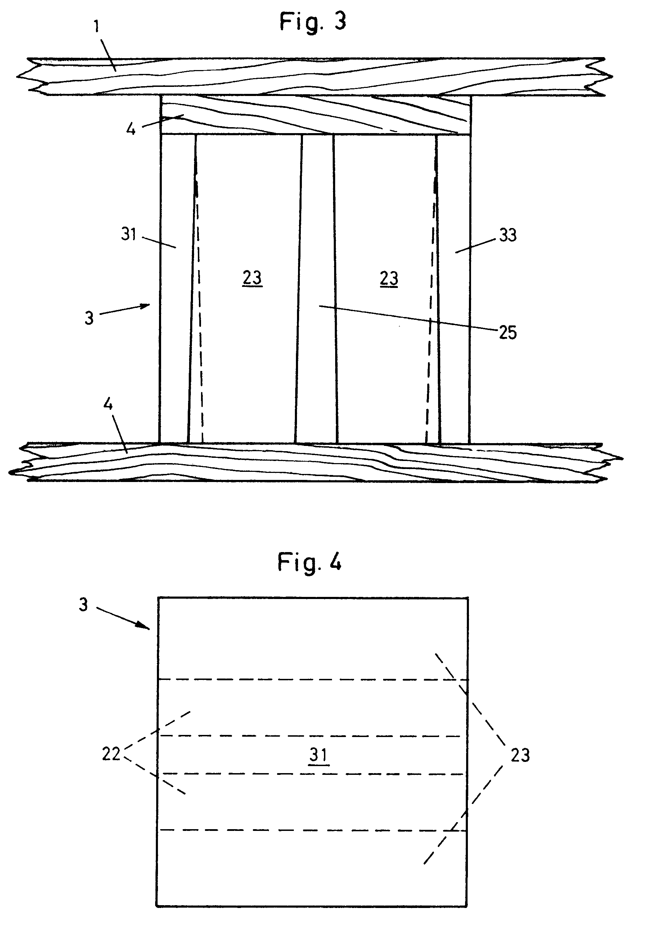

Aus der Figur 3 ist ersichtlich, dass die Stege 25,26 in der Höhenrichtung des Klotzes 3 verlaufen.

Betrachtet man die linke Seite der Figur 2, bzw. des Vierecks des Flächenabschnittes 5, ist ersichtlich, dass der eine, von der Seitenlinie 30 senkrecht abstehende Steg und die zwei, bei den Ecken des Vierecks bzw. zwei Enden der Seitenlinie 30 schiefwinklig abstehenden Stege einstückig in eine Querplatte 31 übergehen, die parallel zur Seitenlinie 30 verläuft. Damit bilden die in der Aufsicht nach Figur 2 sichtbaren oberen Endflächen der drei Stege und der Querplatte 31 einen weiteren Flächenabschnitt 7, der mit dem Flächenabschnitt 5 fluchtet und eine Auflagefläche für den Unterzug 2 bildet.

Bei der der Seitenlinie 30 des Vierecks 5 gegenüberliegenden Seitenlinie 28 steht wieder ein senkrecht dazu verlaufender Steg und bei den zwei Ecken des Vierecks wieder jeweils ein schiefwinklig zur Seitenlinie 28 verlaufender Steg ab. Diese drei Stege enden einstückig in der Querplatte 33, womit durch die oberen Endflächen dieser vier Bauteile ein weiterer Flächenabschnitt 9 gebildet ist, der mit dem Flächenabschnitt 5 fluchtet und als weitere reine Auflagefläche dient.

Von der oberen Seitenlinie 27 des Vierecks 5 steht ein weiterer Steg rechtwinklig ab, um wie oben einen weiteren tragenden Flächenabschnitt 8 zu bilden und entsprechend steht von der unteren Seitenlinie 29 des Vierecks noch ein weiterer Steg rechtwinklig ab, der den weiteren tragenden Flächenabschnitt 10 bildet.

Somit ist der Flächenabschnitt 5 (die Nagelzone) der als Verbindungabschnitt und kraftübertragender Flächenabschnitt dient, von vier Flächenabschnitten 7,8,9 und 10 umgeben, die ausschliesslich kraftübertragende Flächenabschnitte sind.

Durch die gezeigte Ausbildung des Klotzes weist er folglich gewichtsvermindernde Durchdringungen 22 und Aussparungen 23 auf, die über seine gesamte Höhe verlaufen.

Die Seitenansicht gemäss Figur 3 zeigt weiter, dass die von den Seitenlinien 27 und 29 abstehenden Stege oben (basiert auf der Stellung nach Figur 2) eine kleinere Wandstärke als unten aufweisen. Die Querplatten weisen unten eine kleinere Wandstärke als unten auf. Entsprechend sind die Aussparungen 23 von unten nach oben auseinanderlaufend, die Durchdringungen 22 von oben nach unten auseinanderlaufend.

Dadurch, dass der Klotz ein Spritzgusserzeugnis ist, sind die Aussenseiten der Querplatten 31,33 gemäss den jeweiligen Normen beschriftbar, bzw. können Markierungen durch entsprechende Strukturierungen der Spritzgussform schon beim Spritzgiessen geformt werden.

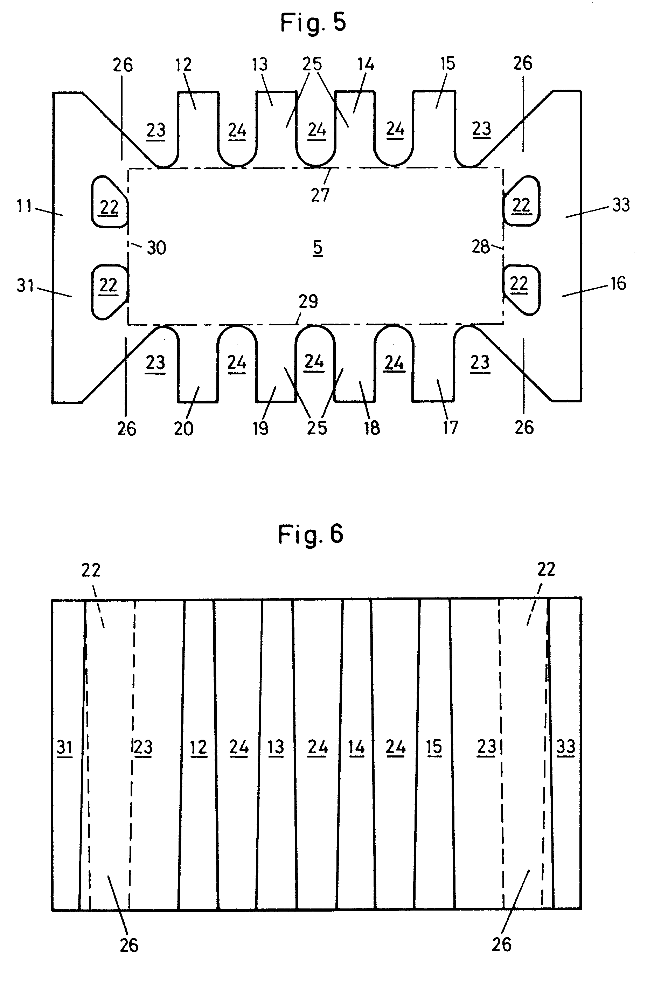

Die Figur 5 zeigt eine Aufsicht, die Figur 6 eine Seitenansicht einer weiteren Ausführung des Klotzes. Der viereckige Flächenabschnitt 5, der die Nagelzone bildet, ist von einer grösseren Anzahl weiterer, nur Kräfte übertragender Flächenabschnitte 11-20 umgeben. Parallel zu den Seitenlinien 28 und 30 des Vierecks des Flächenabschnittes 5 verläuft jeweils eine Querplatte 31 bzw. 33, die einstückig mit jeweils einem von der entsprechenden Seitenlinie 28 bzw. 30 in einem rechten Winkel abstehenden Steg 25 und zwei schiefwinklig bei den Ecken des Vierecks abstehenden Stegen 26 ausgebildet ist. Somit ergeben sich, analog zur Ausführung gemäss Figur 2, zwei zusätzliche, nur Kräfte übertragende Flächenabschnitte 11 und 16.

Im Gegensatz zur Ausführung nach Figur 2 stehen bei der Längsseitenlinien 27 und 29 der Viereckfläche 5 der Ausführung nach Figur 5 jeweils vier Stege 25 rechtwinklig ab, so dass sich insgesamt acht zusätzliche Flächenabschnitte 12-15; 17-20 ergeben, die wieder nur zur Kraftübertragung dienen. Die Aussenseiten der zwei Platten 31 und 33 sind wieder beschriftbar, da der Klotz spritzgegossen ist.

Aus der Seitenansicht nach Figur 6 ist wieder ersichtlich, dass die Stege 25 oben eine kleiner Wandstärke als unten aufweisen. Die Seitenplatten weisen oben eine grössere Wandstärke als unten auf. Die Aussparungen 23,24 sind von oben nach unten zusammenlaufend, die Durchdringungen von oben nach unten auseinanderlaufend ausgebildet.

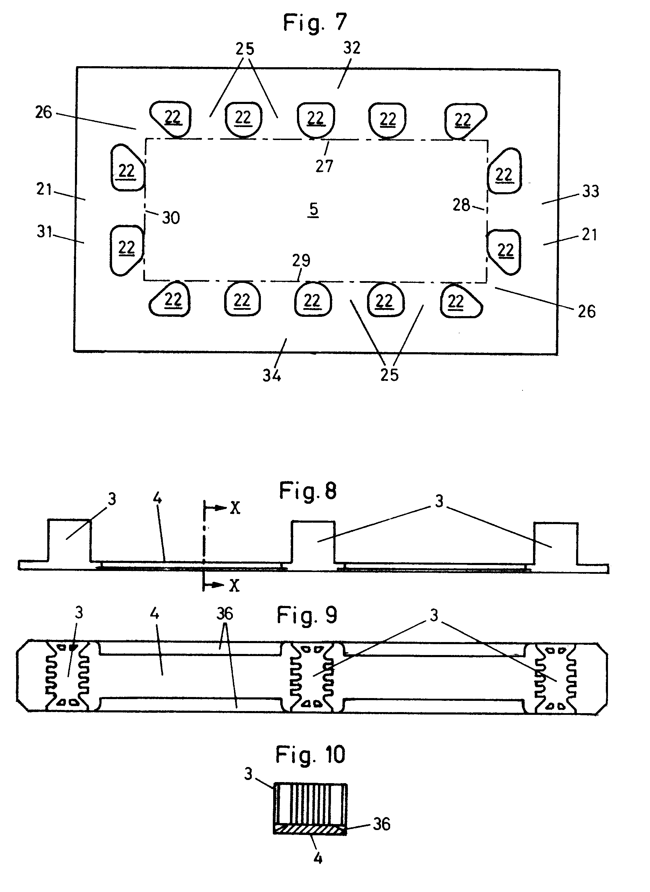

Figur 7 zeigt eine noch weitere Ausführung des Klotzes. In bezug auf die Stege 25,26 gleicht die Ausführung nach Figur 7 der Ausführung nach Figur 6. Der Unterschied liegt darin, dass bei der Ausführung nach Figur 7 vier Querplatten 31,32,33 und 34 und ausschliesslich Durchdringungen 22, jedoch keine rippenförmige Stege vorhanden sind.

Der Abstand zwischen den jeweiligen Ausnehmungen 22 ist als etwa gleich ihrem Durchmesser gezeichnet. Es sind jedoch auch weitere Ausführungen vorgesehen, bei denen die Ausnehmungen 22 breiter als die dazwischen vorhandenen Stege 25 sind, die Ausnehmungen 22 also in der Aufsicht die Form von länglichen Schlitzen aufweisen, die parallel zu den Aussenkanten des Klotzes verlaufen.

In den Figuren 8-10 ist eine Ausführung des Trägerteils in Form einer Kufe für Paletten gezeigt, die einstückig aus einem Bodenbrettglied 4 und drei Klötzen 3 gebildet ist. Die Figur 9 ist eine Aufsicht, die Figur 8 einen Schnitt entlang der Linie VIII-VIII und die Figur 10 einen Schnitt entlang der Linie X-X der Figur 9. Die gesamte Kufe ist ein einstückiges Spritzgusserzeugnis.

Sie besteht aus drei Klötzen 3, die gleich der Ausführung nach Figur 5 ausgebildet sind, und einem mit den Klötzen 3 einstückig ausgebildetem Bodenbrettglied 4. Dieses Bodenbrettglied weist seitliche Abschrägungen 36 auf, ist also bei den zwischen den Klötzen 3 verlaufenden Abschnitten mit einer trapezförmigen Querschnittsform ausgebildet.

Bei der Betrachtung der aus wiederverwertetem Kunststoff bestehenden Kufe nach den Figuren 8-10 zusammen mit der gesamten Palette nach Figur 1 wird ersichtlich, dass zur Herstellung der gesamten Palette beträchtlich weniger Holz (nur noch für die Deckbretter 1 und Unterzüge 3) verwendet werden muss und ein sinnvoller Einsatz von wiederverwerteten Haushalt-Kunststoff-Müll vorhanden ist, wobei nachdem eine solche Palette aufgrund von Abnützungserscheinungen ausgschieden werden muss, der Kunststoff wieder zur erneuten Herstellung der oben beschriebenen Bauteile herangezogen werden kann.

## Patentansprüche

1. Einstückiger Trägerteil für Paletten, die Brettglieder (1,2,4) aufweisen, welche mit Klötzen (3) verbunden sind, dadurch gekennzeichnet, dass er spritzgegossen ist, eine erste Phase aus einem Gemisch aus thermoplastischen Kunststoffen mit einem Anteil von 55-75 Gew-% Polyolefinen, eine weitere Phase aus einem Gemisch aus kunststofffremden Stoffen, und mindestens eine beschriftbare Seitenfläche zur Aufnahme von genormten Markierungen jeweiliger Paletten enthält und Stege (25,26) aufweist, welche Stege (25,26) Durchdringungen (22) und/oder Aussparungen (23) im Trägerteil bestimmen.

2. Trägerteil nach Anspruch 1, dadurch gekennzeichnet, dass die erste Phase in einem Anteil von mindestens 90 Gew.-% und die zweite Phase in einem Anteil von höchstens 10 Gew.-% vorliegt.

3. Trägerteil nach Anspruch 1 oder 2, dadurch gekennzeichnet, dass er mindestens einen Klotz (3) für Paletten bildet, welcher Klotz (3) mindestens einen Flächenabschnitt (5) zur Aufnahme von Verbindungselementen (6) zur Befestigung mindestens eines Brettgliedes (1,2) auf demselben aufweist und gleichzeitig zur Uebertragung eines Teiles von über das Brettglied (1,2) auf den Klotz (3) wirkenden Kräften dient, welcher mindestens einen Flächenabschnitt (5) von weiteren miteinander und mit demselben fluchtenden Flächenabschnitten (7-10;11-20;21) umgeben ist, auf denen ein jeweiliges Brettglied (2) verbindungsfrei lediglich aufliegt und zur Uebertragung eines weiteren Teiles von über das Brettglied (2) auf den Klotz (3) wirkenden Kräften dient.

4. Trägerteil nach einem der vorangehenden Ansprüchen, dadurch gekennzeichnet, dass die Durchdringungen (22) und/oder Aussparungen (23) im Klotz (3) beim Bereich der weiteren Flächenabschnitte (7-10;11-20;21) angeordnet sind und mindestens annähernd senkrecht zu denselben und über die gesamte Höhe des Klotzes (3) verlaufen.

5. Trägerteil nach einem der vorangehenden Ansprüchen, dadurch gekennzeichnet, dass der Flächenabschnitt (5) zur Aufnahme von Verbindungselementen (6) ein rechtwinkliges Viereck bildet und dass die Stege (25,26) ausserhalb dieses Vierecks angeordnet sind und mindestens annähernd senkrecht zum Flächenabschnitt (5) verlaufen, wobei eine erste Anzahl Stege (25) vom Bereich der Seitenlinien (27-30) des Vierecks mit denselben einen rechten Winkel einschliessen und geradlinig abstehen und eine zweite Anzahl Stege (26) vom Bereich der Ecken des Vierecks schiefwinklig zu dessen Seitenlinien (27-30) abstehen.

6. Trägerteil nach einem der vorangehenden Ansprüchen, dadurch gekennzeichnet, dass bei entgegengesetzt zueinander angeordneten, parallel zueinander verlaufenden Seitenlinien (27,29 bzw. 28,30) des Vierecks die beim Bereich der Ecken schiefwinklig abstehenden Stege (26) bei ihren von der jeweiligen Seitenlinie entfernten Endbereichen über eine parallel zu und im Abstand von der jeweiligen Seitenlinie verlaufende, die beschriftbare Seitenfläche enthaltende Querplatte (31,33) einstückig miteinander und mit jedem jeweils zwischen den schiefwinklig abstehenden Stegen (26) rechtwinklig abstehenden Steg (25) verbunden sind, so dass der Klotz (3) senkrecht zu den miteinander fluchtenden Flächenabschnitten (7-10;11-20) verlaufende, durch die Stege (25,26) und dazwischen angeordneten Abschnitte der jeweiligen Querplatte (31,33) umgrenzte Durchdringungen aufweist, derart, dass der Klotz (3) zwei entgegengesetzte, aussen beschriftbare Querplatten (31,33) und beim Bereich zwischen denselben mindestens ein parallel zu diesen verlaufende rippenförmigen Steg (8,10;12,15;17-20) aufweist.

7. Trägerteil nach einem der vorangehenden Ansprüchen, dadurch gekennzeichnet, dass alle Stege (25, 26) durch insgesamt vier, zu den jeweiligen Seitenlinien (27-30) des Vierecks parallel und im Abstand verlaufende Querplatten einstückig miteinander verbunden sind, derart, dass der Klotz (3) vier glattwandige und aussen beschriftbare Querplatten (31-35) und senkrecht zu den miteinander fluchtenden Flächenabschnittene (21) verlaufende Durchdringungen (22) aufweist.

8. Trägerteil nach einem der vorangehenden Ansprüchen, dadurch gekennzeichnet, dass die kunststofffremden Stoffe mindestens Papierteile, Holzmehlteile und Aluminiumfolienteile sind, die bei Kunststofferzeugnissen aus wiederverwerteten Kunststoffgegenständen aus Polyolefinen im verarbeiteten Kunststoff verblieben sind.

9. Trägerteil nach einem der vorangehenden Ansprüchen, dadurch gekennzeichnet, dass er aus einem Bodenbrettglied (4) und einer Anzahl mit demselben einstückig spritzgegossenen Klötzen (3) besteht und eine Kufe von Paletten bildet.
